# EUROPÄISCHE PATENTANMELDUNG

(11) **EP 0 677 407 A1**
(43) Veröffentlichungstag der Anmeldung: **18.10.1995**
(21) Anmeldenummer: 95104294.4
(22) Anmeldetag: 23.03.1995
(51) Int. Cl.: B60D 1/62, B60D 1/36

(54) **Anhängevorrichtung**

(30) Priorität: 08.04.1994 DE 4412111
(71) Anmelder: DEERE & COMPANY, Moline, Illinois 61265 (US)
(72) Erfinder: Barzen, Rainer, D-54516 Flussbach (DE); Mies, Dieter, D-53881 Euskirchen (DE); Dannigkeit, Helmut, D-66484 Battweiler (DE)
(74) Vertreter: Feldmann, Bernhard

(57) **Zusammenfassung**

Anhängevorrichtung (10) bei der eine Haltevorrichtung (14) eines Zugmauls (12) in funktionaler Verbindung mit einer Verriegelungsvorrichtung (18) für eine aus einem Stecker und einer Steckdose (16) bestehenden Kupplung steht.

Die Anhängevorrichtung (10) kann an jeder Art eines Zugfahrzeugs benutzt werden.

## Beschreibung

Die Erfindung betrifft eine Anhängevorrichtung mit einem eine selbsttätig schließende Haltevorrichtung aufweisenden Zugmaul und wenigstens einer Steckdose und einem dazugehörigen Stecker für eine Energiezufuhrleitung.

Die EP-A1-0 434 472 offenbart eine automatische Anhängevorrichtung zum Anschluß eines Anhängers oder dergleichen an ein Zugfahrzeug. Diese Anhängevorrichtung enthält eine federbelastete, automatisch schließende Anhängekupplung, die mittels eines Stellmotors entriegelt werden kann. Mittels dieser Anhängekupplung wird die Zugöse gehalten und somit die Zugkraft übertragen. An der Unterseite der Anhängekupplung ist in zwei Richtungen beweglich ein Arm mit einer Platte vorgesehen, der jeweils den einen Teil einer Elektrokupplung oder einer Druckluftdose und einen Führungszapfen trägt. Der jeweils dazu passende zweite Teil befindet sich auf einer zweiten Platte, die an der Deichsel des Anhängers befestigt ist. Die an der Anhängevorrichtung befindliche Platte wird mittels eines Motors, z. B. eines Hydraulikzylinders, an die mit der Deichsel verbundene Platte angelegt und in Kontakt gehalten.

Diese Anhängevorrichtung ist insofern nachteilig, als sie zur Herstellung einer Verbindung der Elektrokupplung(en) oder Druckluftdose(n) einen eigenen Motor benötigt und sich die Beweglichkeit der von ihm bewegten Platte negativ auf die Verbindung auswirken kann.

Die DE-A-30 09 284 zeigt ebenfalls eine Anhängevorrichtung mit elektrischen Kupplungen, einer Antriebswelle und einer Druckmittelkupplung, die mehr oder weniger konzentrisch in eine große Kupplungsglocke eingebaut sind, während sich die damit zu verbindenden Komponenten in einem in die Kupplungsglocke einführbaren Rohr befinden, das in der Kupplungsglocke arretierbar ist. Die Kupplungsglocke ist mittels einer großen Spiraldruckfeder in Grenzen an einem Zugfahrzeug beweglich gehalten.

Diese Anhängevorrichtung benötigt eine speziell geformte Kupplungsglocke und ein in diese passendes Rohr, sowie eine spezielle Verriegelungsvorrichtung. Diese Bauart schließt somit die Verwendung handelsüblicher Kupplungselemente aus und ist sehr teuer und aufwendig.

Die DE-A-1 655 018 zeigt eine Verbindung zwischen einem Zugfahrzeug und einem Anhänger mit jeweils einer anhängerseitigen und einer zugfahrzeugseitigen Platte, die mit einer Vielzahl von Kupplungselementen bestückt ist. Bei dieser Art einer Verbindung ist ein Zugmaul nicht integriert, sondern davon getrennt vorgesehen. Außerdem bedarf es eines exakten Heranfahrens des Zugfahrzeugs an den Anhänger, wenn die beiden Platten zusammenpassen sollen.

Schließlich geht aus der DE-A-32 02 047 eine Ankuppelhilfe für Nutzfahrzeuge hervor, die mittels eines optischen Steuersystems und unter Zuhilfenahme einer Führungsstange eine Deichsel bzw. deren Zugöse in ein Zugmaul einführt.

Bei dieser Vorrichtung ist eine Verbindung von Hydraulikkupplungen und Elektrosteckern nicht vorgesehen. Darüber hinaus ist diese Ankuppelhilfe sehr aufwendig gestaltet und für den rauhen Anhängebetrieb insbesondere in der Landwirtschaft nicht geeignet.

Die der Erfindung zugrunde liegende Aufgabe wird darin gesehen, eine Anhängevorrichtung vorzuschlagen, die den gleichzeitigen Anschluß einer Deichsel mit Zugöse und Energieübertragungsleitungen ermöglicht, wobei eine sichere Verbindung aller Kupplungsteile sichergestellt sein muß, und zur Arretierung bzw. Verbindung möglichst wenige separate Hilfsmittel Verwendung finden sollen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise werden die Leitungskupplungen für Strom-, Druckluft- und/oder Flüssigkeitsübertragung automatisch und sicher mittels der Haltevorrichtung des Zugmauls gesichert. Ein separater Motor ist nicht erforderlich, und die formschlüssige Verbindung stellt eine gute Energieübertragung sicher.

Das Vorhandensein eines Leerlaufbereichs läßt eine Verstellung der Verriegelungsvorrichtung mittels eigener Kraft zu, ohne daß ein Bowdenzug, ein Motor oder dergleichen der schnellen Verriegelungsbewegung folgen müßte.

Wenn das Zugmaul mit einer beweglichen Zugösenführungsplatte versehen ist, kann auch eine nicht exakt positionierte Zugöse aufgenommen werden, so daß ein in Grenzen vorhandener horizontaler oder vertikaler Versatz den Anhängevorgang nicht beeinträchtigt.

Eine gezielt oder gesteuert verstellbare Zugösenführungsplatte hat den Vorteil, daß bei einer ungünstigen Lage der Zugöse diese aktiv zu dem Zugmaul geführt und dort arretiert werden kann. Je nach der Ausführung der Zugösenführungsplatte und deren Verstellvorrichtung kann die Zugösenführungsplatte auch vollkommen aus dem Bereich der Anhängevorrichtung entfernt werden und somit Freiraum für einen größeren Lenkwinkel oder eine andere Komponenten liefern.

Die Verwendung wenigstens eines Stellungssensors ermöglicht es, an einer entfernt liegenden Stelle, z. B. in einem Fahrerhaus, anzuzeigen, ob das Zugmaul und somit auch die Kupplung für die Energiezufuhrleitung geschlossen ist, und gegebenenfalls eine Fahrt bei nicht ordnungsgemäß angehängtem Gerät oder Anhänger zu verhindern.

Eine genaue Einführung des Steckers in die Steckdose kann in einfacher Weise erreicht werden, wenn einer von beiden auf einer Kupplungsführungsplatte zu dem jeweils anderen geführt wird.

Der Steuerungsaufwand wird gering gehalten, und eine hohe Steuerungsqualität bei geringer körperlicher Arbeit wird erreicht, wenn zur Bewegung in die eine Richtung ein fernsteuerbarer Motor und zur Bewegung in die andere Richtung ein Kraftspeicher, z. B. eine Schrauben- oder Torsionsfeder benutzt wird.

In der Zeichnung ist ein nachfolgend näher beschriebenes Ausführungsbeispiel der Erfindung dargestellt. Es zeigt:
- Fig. 1: eine erfindungsgemäße Anhängevorrichtung in Seitenansicht,
- Fig. 2: den vorderen Teil eines Anhängers mit einer Zugöse zur Aufnahme in der Anhängevorrichtung und
- Fig. 3: eine Zugösenführungsplatte der Anhängevorrichtung in Draufsicht.

Eine erfindungsgemäße Anhängevorrichtung 10 setzt sich bei dem bevorzugten Ausführungsbeispiel aus einem Zugmaul 12 mit einer Haltevorrichtung 14, einer Steckdose 16 und einer Verriegelungsvorrichtung 18 zusammen.

Die Anhängevorrichtung 10 ist - was nicht im einzelnen gezeigt ist - an der Rückseite eines Mähdreschers oder Feldhäckslers angebaut und dient der Verbindung mit einem Anhänger, auf dem eine Erntebergungsvorrichtung, z. B. eine Pick-Up, ein Schneidwerk, ein Maispflückvorsatz oder dergleichen transportiert wird. Selbstverständlich kann die Anhängevorrichtung 10 auch an jedem anderen Zugfahrzeug angebracht sein, es sich bei dem Anhänger auch um ein irgendwie geartetes Transportgestell, z. B. integriert in eine Maschine, und bei der Erntebergungsvorrichtung auch um eine andere Art einer zu transportierenden Maschine handeln. Jeder denkbaren Ausführung ist jedoch gemein, daß sie sowohl dem Anschluß einer Zugöse für die Zugkraftübertragung und wenigstens einer Kupplung für die elektrische, pneumatische oder hydraulische Übertragung von Energie dient.

Zur Befestigung der Anhängevorrichtung 10 an einem nicht gezeigten Zugfahrzeug ist eine Konsole 20 vorgesehen, an die sowohl das Zugmaul 12, die Haltevorrichtung 14, wie auch die Verriegelungsvorrichtung 18 angebaut sind.

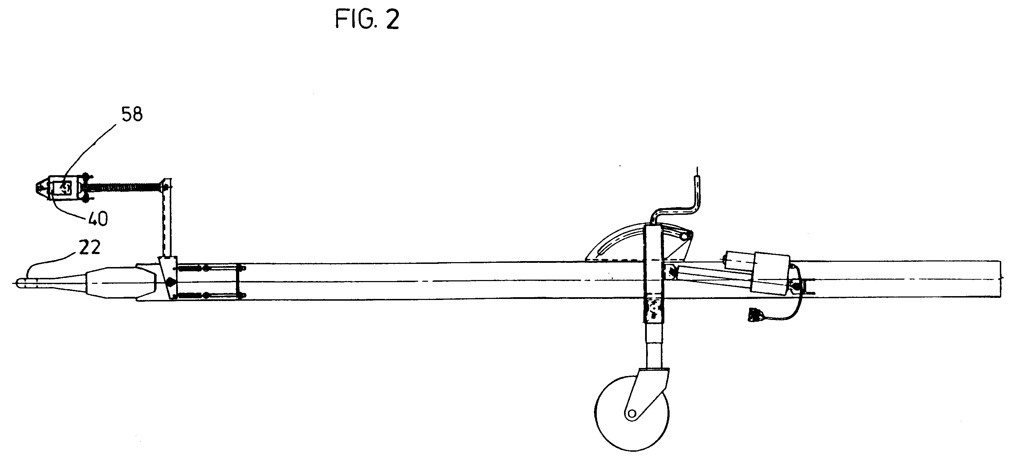

Das Zugmaul 12 ist von der automatischen Bauart, d. h. es enthält einen nicht gezeigten Kupplungsbolzen zum Durchdringen einer Zugöse 22 gemäß Figur 2, der mittels der Haltevorrichtung 14 unter Federkraft in seine verriegelnde Stellung bringbar ist. Hierzu ist eine ebenfalls nicht gezeigte, aber hinlänglich bekannte Druckplatte vorgesehen, die bei entsprechendem Kontakt mit der Zugöse 22 die Haltevorrichtung 14 aktiviert.

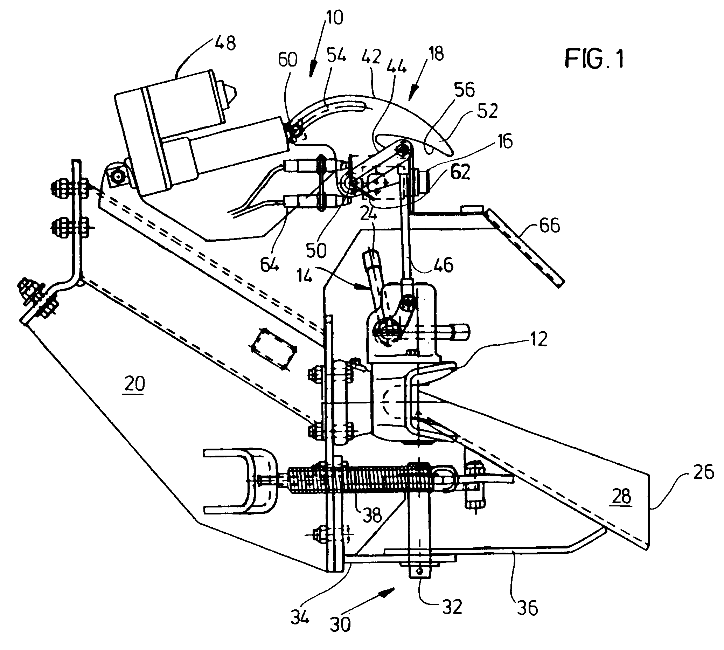

Die Haltevorrichtung 14 enthält einen Schwenkarm 24, der unter der Kraft einer nicht dargestellten Torsionsfeder in die in Figur 1 in unterbrochenen Linien dargestellte Position bringbar ist und dort gehalten wird; in dieser Position legt der Kupplungsbolzen die Zugöse 22 in dem Zugmaul 12 fest.

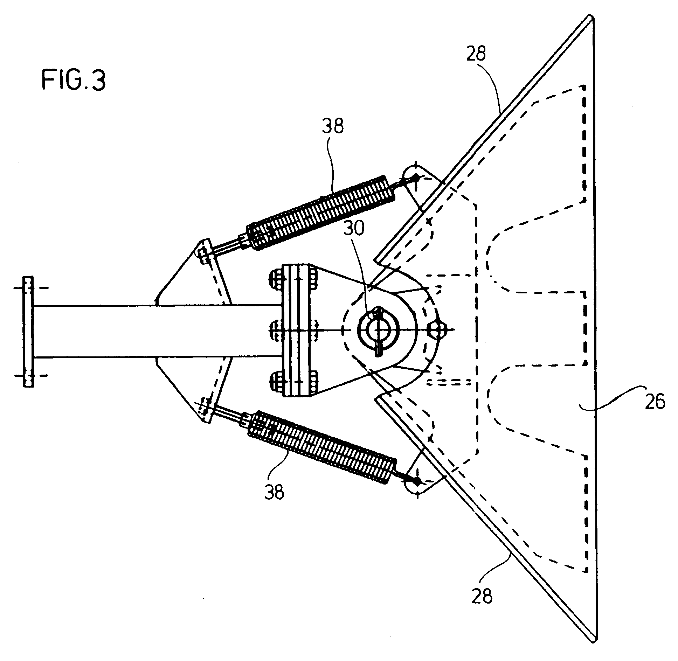

In das Zugmaul 12 mündet eine Zugösenführungsplatte 26, wie sie in Figur 3 in Draufsicht gezeigt ist. Die Zugösenführungsplatte 26 hat in der Draufsicht nahezu die Gestalt eines gleichschenkligen rechtwinkligen Dreiecks, dessen den rechten Winkel enthaltender Eckbereich von der Längsachse des Kupplungsbolzens durchdrungen wird. Ausgehend von dem Zugmaul 12 erstreckt sich die Zugösenführungsplatte 26 nach unten und von dem Zugmaul 12 weg zu der Zugöse 22 bis zu einer Höhe bzw. Tiefe, in der die Zugöse 22 aufgenommen werden und zu dem Zugmaul 12 gleiten kann. Die Zugösenführungsplatte 26 hat an den Schenkelseiten hochgebogene Kanten 28 zur seitlichen Führung der Zugöse 22 und an ihrer Unterseite ein Lager 30, mit dem sie an der Konsole 20 horizontal schwenkbar angebracht ist. Die Schwenkachse ist vorzugsweise koaxial zu der Längsachse des Kupplungsbolzens, die zugleich die Schwenkachse der Zugöse 22 darstellt. Das Lager 30 wird von einem Bolzen 32, einer Gabel 34 an der Konsole 20 und einer Gabel an der Zugösenführungsplatte 26 gebildet, die in einer gelenkigen Beziehung zueinander stehen. Zur Zentrierung der Zugösenführungsplatte 26 gegenüber dem Zugmaul 12 ist zwischen jeder Seite der Zugösenführungsplatte 26 und der Konsole 20 eine Feder 38 gespannt.

Die Steckdose 16 ist in diesem Fall eine Elektrosteckdose mit Polen oder Kontaktplatten, an die entsprechende Gegenstücke in einem Stecker 40 an der Zugöse 22 zur Anlage oder in Verbindung gebracht werden können. Anstatt der elektrischen Übertragung von Strom könnte auch eine hydraulische oder pneumatische Energieübertragung stattfinden. Des weiteren könnte die Steckdose 16 auch zugösenseitig und der Stecker 40 zugmaulseitig vorgesehen werden. Schließlich können auch mehrere Steckkupplungen für gleiche oder unterschiedliche Energieübertragungen vorgesehen werden. In diesem Ausführungsbeispiel gehen von dem Stecker 40 nicht gezeigte Kabel zu der Beleuchtung des Anhängers oder der Betätigung einer motorisch verstellbaren Anhängerstütze aus.

Die Verriegelungsvorrichtung 18 setzt sich bei diesem Ausführungsbeispiel aus einer Schwenkplatte 42, einem Betätigungsarm 44, einer Stange 46 und einem Motor 48 zusammen und dient primär dem Einziehen und der Festlegung des Steckers 40 in die bzw. der Steckdose(n) 16.

Die Schwenkplatte 42 ist um eine in diesem Fall horizontale Achse 50 vertikal schwenkbar und weist eine Nase 52 und einen Längsschlitz 54 auf.

Die Nase 52 weist eine rückwärtige, d. h. der Achse 50 zugelegene Gleitbahn 56 auf, die sich mit Bezug auf den Mittelpunkt der Achse 50 radial nach innen verlagert, wenn man sie mit Blick auf Figur 1 entgegen dem Uhrzeigerdrehsinn verfolgt. Die Nase 52 bzw. deren Gleitbahn 56 dient dem Eingriff mit einem auf dem Stecker 40 befestigten Bolzen 58, über den der Stecker 40 bei sich im Uhrzeigerdrehsinn schwenkender Schwenkplatte 42 in die Steckdose 16 gezogen wird.

Der Längsschlitz 54 verläuft auf einem Kreisbogen um den Mittelpunkt der Achse 50 und erstreckt sich ungefähr über den maximalen Schwenkweg der Schwenkplatte 42 in deren äußerem Randbereich.

Der Betätigungsarm 44 ist mit der Schwenkplatte 42 drehfest verbunden; sofern dies über die Achse 50 erfolgt, wirkt diese dann als Welle. Der Betätigungsarm 44 ist derart ausgebildet und angeordnet, daß seine Bewegung mit der des Schwenkarms 24 der Haltevorrichtung 14 korrespondiert.

Die Stange 46 stellt eine Zugverbindung zwischen dem Schwenkarm 24 der Haltevorrichtung 14 und dem Betätigungsarm 44 der Verriegelungsvorrichtung 18 dar; gleichsam könnte auch ein Seil, eine Kette oder dergleichen verwendet werden. Die Stange 46 greift an dem Betätigungs- und Schwenkarm 24 und 44 jeweils an deren der Schwenkachse abgelegenen Endbereich vertikal schwenkbar an.

Daraus wird ersichtlich, daß eine entgegen dem Uhrzeigerdrehsinn gerichtete Schwenkbewegung der Schwenkplatte 42 aus der in Figur 1 gezeigten Stellung über den Betätigungsarm 44 und gegebenenfalls über die Achse 50, über die Stange 46 und den Schwenkarm 24 ein Öffnen des Zugmauls 12 bewirkt, während dessen Schließen aufgrund des Eintritts der Zugöse 22 über dieselbe Verbindung die Schwenkplatte 42 im Uhrzeigerdrehsinn schwenkt.

Der Motor 48 ist in diesem Ausführungsbeispiel als ein linear wirkender Elektromotor ausgebildet, der mittels Kabeln und Schaltern auch fernbetätigt werden kann. Anstelle des Elektromotors könnte auch ein Druckmittelmotor verwendet werden. Während der Motor 48 einenends schwenkbar an der Konsole 20 angreift, durchdringt sein beweglicher Teil anderenends den Längsschlitz 54 mittels eines Stifts 60, der in dem Längsschlitz 54 gleiten kann. Der Motor 48 hat lediglich die Aufgabe, die Schwenkplatte 42 und mithin den Schwenk- und den Betätigungsarm 44, 24 mit Blick auf Figur 1 entgegen dem Uhrzeigerdrehsinn zu schwenken, was er dadurch bewirkt, daß er seinen linear beweglichen Teil einzieht und durch Anlage des Stifts 60 an dem linken Endbereich des Längsschlitzes 54 die Schwenkplatte 42 mitnimmt. Nachdem der Motor 48 und die Schwenkplatte 42 die in Figur 1 gezeigte Stellung eingenommen haben, wird der Motor 48 wieder ausgefahren, bis der Stift 60 an dem anderen Ende des Längsschlitzes 54 anliegt. In dieser Stellung ist die Schwenkplatte 42 frei, im Uhrzeigerdrehsinn zu schwenken, wenn die entsprechende Bewegung durch das automatische Schließen des Zugmauls 12 eingeleitet wird.

Der Stecker 40 kann vertikal nachgiebig auf der Zugöse 22 oder der diese tragenden Deichsel angeordnet sein, um evtl. Höhenversatz während des Ankupplungsvorgangs ausgleichen zu können. Jedenfalls ist der Stecker 40 horizontal beweglich, z. B. durch seine Aufnahme in einer Spiralfeder, um beim Durchfahren einer Kurve weder Verspannungen noch Zerstörungen in der Kupplung zu verursachen. Eine wenn auch teuerere Alternative wäre eine horizontale Schwenklagerung der Verriegelungsvorrichtung 18.

Im Schwenkbereich des Betätigungsarms 44, bzw. einer an diesem drehfest angebrachten Platte 62 befinden sich zwei Stellungssensoren 64 in der Art von Druckschaltern, die vorzugsweise über Kabel, über die die jeweilige Endstellung der Schwenkplatte 42 und somit der Betriebs- oder Außerbetriebszustand des Zugmauls 12, der Haltevorrichtung 14 und der Verriegelungsvorrichtung 18 erkennbar und z. B. in einem Fahrerhaus anzeigbar sind.

Schließlich kann im Bereich der Steckdose 16 analog zu der Zugösenführungsplatte 26, allerdings in starrer Ausbildung, eine Stecker- oder allgemeiner eine Kupplungsführungsplatte 66 vorgesehen werden, die in diesem Fall den Stecker 40 in die Steckdose 16 leitet.

Nach alledem ergibt sich folgende Funktion.

Es wird ausgegangen von einem Zustand, in dem das Zugmaul 12 offen ist, die Schwenkplatte 42 ihre entriegelnde Stellung gemäß Figur 1 einnimmt, sich die Zugöse 22 außerhalb des Bereichs der Zugösenführungsplatte 26 befindet und der Motor 48 - anders als in Figur 1 gezeigt - ausgefahren ist, so daß sich sein Stift 60 an dem rechten Ende des Längsschlitzes 54 befindet.

Zum Anschluß des Anhängers oder dergleichen an das Zugfahrzeug, und zwar vorzugsweise ohne eine direkte Einwirkung einer Bedienungsperson an der Kupplungsstelle, wird das Zugfahrzeug an den Anhänger so herangefahren, daß die Zugöse 22 auf die Oberfläche der Zugösenführungsplatte 26 auftrift und auf dieser beim weiteren Zurücksetzen des Zugfahrzeugs zu dem Zugmaul 12 gleiten kann. Beim Zusammenfahren des Zugfahrzeugs und des Anhängers sollte, soweit möglich, darauf geachtet werden, daß sich die Längsmittenachsen beider Fahrzeuge in der Fahrtrichtung decken.

Die Manövrierbewegung wird so lange fortgesetzt, bis die Zugöse 22 vollends in das Zugmaul 12 eingetreten ist und dessen Schließmechanismus betätigt, wobei sich gleichzeitig auch der Stecker 40 unmittelbar vor der Steckdose 16 befindet oder in diese bereits eingetreten ist. Sobald der Schließmechanismus des Zugmauls 12 ausgelöst ist, zieht der Schwenkarm 24 über die Stange 46 und den Betätigungsarm 44 die Schwenkplatte 42 im Uhrzeigerdrehsinn nach unten, so daß sich der Kupplungsbolzen in die Zugöse 22 bewegt. Gleichzeitig ergreift die Nase 52 den Bolzen 58 des Steckers 40, zieht diesen in die Steckdose 16 hinein und hält ihn darin fest. Diese Bewegung der Schwenkplatte 42 ist aufgrund des Längsschlitzes 54 möglich, in dem der Stift 60 während des Schwenkvorgangs frei gleiten kann. Sobald die Schwenkplatte 42 ihre Endstellung erreicht hat, wird der in Figur 1 unten angeordnete Stellungssensor 64 betätigt und zeigt an einer entfernten Stellung den vollzogenen Schließvorgang an. Sollte wider Erwarten die Schwenkplatte 42 nicht in ihre Endstellung gelangen können, weil z. B. der Kupplungsbolzen nicht ganz nach unten gleitet oder es beim Einfügen des Steckers 40 in die Steckdose 16 zu Störungen kommt, wird der untere Stellungssensor 64 nicht von der Platte 62 erreicht und folglich nicht betätigt, so daß eine Anzeige über einen erfolgreichen Kupplungsvorgang nicht erfolgt.

Nach dem erfolgreichen Vollzug des Kupplungsvorgangs sowohl der Zugöse 22 in dem Zugmaul 12 als auch des Steckers 40 in der Steckdose 16 kann das Zugfahrzeug mit dem Anhänger die Fahrt aufnehmen, wobei die elektrische Übertragung der Energie zur Betätigung der Beleuchtung und evtl. Betätigung der Abstellstütze über die Kupplung bestehend aus Stecker 40 und Steckdose 16 erfolgt.

Zum Trennen des Anhängers von dem Zugfahrzeug wird - gegebenenfalls nach zuerst erfolgter elektrischer Betätigung der Abstellstütze und evtl. einer Bremse - mittels des Motors 48 die Schwenkplatte 42 zurückgezogen, d. h. entgegen dem Uhrzeigerdrehsinn geschwenkt, so daß die Nase 52 den oder die Bolzen 58 und somit den Stecker 40 freigibt und gleichzeitig über die Stange 46 das Zugmaul 12 entriegelt. Anschließend kann das Gespann getrennt werden, worauf der Stecker 40 und die Zugöse 22 von alleine aus der Steckdose 16 bzw. dem Zugmaul 12 gezogen werden. Zweckmäßigerweise ist an dem Stecker 40 eine Zugentlastung vorgesehen. Schließlich wird der Motor 48 wieder ausgefahren, um die Schwenkplatte 42, d. h. die sie enthaltende Verriegelungsvorrichtung 18, für einen neuen Kupplungsvorgang betriebsfertig zu machen.

## Patentansprüche

1. Anhängevorrichtung (10) mit einem eine selbstättig schließende Haltevorrichtung (14) aufweisenden Zugmaul (12) und wenigstens einer Steckdose (16) und einem dazugehörigen Stecker (40) für eine Energiezufuhrleitung, gekennzeichnet durch eine formschlüssig wirkende Verriegelungsvorrichtung (18) zum axialen Sichern der Steckdose (16) gegenüber dem Stecker (40), die mittels der Haltevorrichtung (14) in eine verriegelnde Stellung bringbar ist.

2. Anhängevorrichtung nach Anspruch 1, dadurch gekennzeichnet, daß die Verriegelungsvorrichtung (18) einen Leerlaufbereich, insbesondere in der Form eines Längsschlitzes (54) aufweist.

3. Anhängevorrichtung nach Anspruch 1 oder 2, dadurch gekennzeichnet, daß das Zugmaul (12) eine bewegliche Zugösenführungsplatte (26) aufweist.

4. Anhängevorrichtung nach Anspruch 3, dadurch gekennzeichnet, daß die Zugösenführungsplatte (26) arretierbar und/oder mittels wenigstens eines Stellmotors positionierbar ist.

5. Anhängevorrichtung nach einem oder mehreren der vorherigen Ansprüche, dadurch gekennzeichnet, daß an der Verriegelungsvorrichtung (18) wenigstens ein Stellungssensor (64) vorgesehen ist.

6. Anhängevorrichtung nach einem oder mehreren der vorherigen Ansprüche, dadurch gekennzeichnet, daß für den Stecker (40) eine Kupplungsführungsplatte (66) vorgesehen ist.

7. Anhängevorrichtung nach einem oder mehreren der vorherigen Ansprüche, dadurch gekennzeichnet, daß die Verriegelungsvorrichtung (18) mittels eines vorgespannten Kraftspeichers schließbar und mittels eines fernsteuerbaren Motors (48), insbesondere eines Elektromotors, geöffnet werden kann.
